# EUROPEAN PATENT APPLICATION

(11) **EP 2 556 868 A1**
(43) Date of publication of application: **13.02.2013**
(21) Application number: 11176870.1
(22) Date of filing: 08.08.2011
(51) Int. Cl.: A63F 13/12

(54) **Virtual map fragment generating method, virtual map generating method, and virtual map generator**

(71) Applicant: Xpec Entertainment Inc., Taipei 104 (TW)
(72) Inventor: Yang, Zhenhua, 100032 Xicheng District (CN)
(74) Representative: Zimmermann, Tankred Klaus

(57) **Abstract**

A virtual map generating method is to be performed by a virtual map generator (100) and an electronic device (200) which communicates with the virtual map generator (100) via a network (300). The virtual map generating method includes: establishing a plurality of basic landform graphic data blocks each representing a graphic image of a corresponding landform layer; configuring the virtual map generator (100) to select at least two of the basic landform graphic data blocks, configuring the virtual map generator (100) to stack the graphic images corresponding to the selected basic landform graphic data blocks so as to form a virtual map fragment (110) configuring the virtual map generator (100) to send a plurality of the virtual map fragments (110) formed thereby to the electronic device (200) via the network (300); and configuring the electronic device (200) to piece together the virtual map fragments (110) received from the virtual map generator (100) so as to form a virtual map.

## Description

The present invention relates to a virtual map generating method, more particularly to a virtual map generating method applied in web games.

A web game is a computer game which does not require installation of a client program and which is executed using a web browser. Since web games have an advantage of convenience and may be played on any computer no matter where players are, more and more companies have devoted efforts to developing and designing web games.

However, since web games are required to support real-time data downloading and data throughput thereof is inevitably restricted under the same hardware system, scales of virtual maps applied in current web games must be restricted to be under certain sizes so as to satisfy a need for real-time downloading at a speed of 24 frames per second.

Therefore, a first object of the present invention is to provide a virtual map generating method for generating a virtual map of any seize by merely establishing a fixed number of basic landform graphic data blocks, stacking graphic images, and piecing together virtual map fragments.

Accordingly, the virtual map generating method of the present invention is to be performed by a virtual map generator and an electronic device which communicates with the virtual map generator via a network. The virtual map generating method comprises:
a) establishing a plurality of basic landform graphic data blocks each representing a graphic image of a corresponding landform layer;
b) configuring the virtual map generator to select at least two of the basic land form graphic data blocks established in step a);
c) configuring the virtual map generator to stack the graphic images corresponding to the basic landform graphic data blocks selected in step b) so as to form a virtual map fragment;
d) configuring the virtual map generator to send a plurality of the virtual map fragments formed thereby to the electronic device via the network; and
e) configuring the electronic device to piece together the virtual map fragment received from the virtual map generator so as to form a virtual map.

Preferably, in step c), the graphic images corresponding to the selected basic landform graphic data blocks are stacked in a preset order so as to form the virtual map fragment.

Moreover, if a user controls a virtual character to move in the virtual map, the virtual map generating method comprises:
a) establishing a plurality of basic landform graphic data blocks each representing a graphic image of a corresponding landform layer;
b) configuring the virtual map generator to determine a shift vector between a previous virtual 1 map displayed on the electric device and a subsequent virtual map to be displayed on the electronic device;
c) configuring the virtual map generator to select at least two of the basic landform graphic data blocks according to the shift vector;
d) configuring the virtual map generator to stack the graphic images corresponding to the basic landform graphic data blocks selected in step c) so as to form a virtual map fragment;
e) configuring the virtual map generator to send at least one of the virtual map fragments formed thereby to the electronic device via the network; and
f) configuring the electronic device to piece together an area, where the subsequent virtual map overlaps the previous virtual map, and the at least one virtual map fragment received from the virtual map generator so as to form the subsequent virtual map.

Preferably, in step b), the shift vector is calculated according to position information of the virtual character in the previous virtual map and the subsequent virtual: map received from the electronic device via the network.

Furthermore, a second object of the present invention is to provide a virtual map fragment generating method.

The virtual map fragments generated according to the method may be used to constitute a virtual map.

Accordingly, the virtual map fragment generating method of the present invention is to be performed by a virtual map generator. The virtual map fragment generating method comprises:
a) establishing a plurality of basic landform graphic data blocks each representing a graphic image of a corresponding landform layer;
b) selecting at least two of the basic landform graphic data blocks established in step a); and
c) stacking the graphic images corresponding to the basic Landform graphic data blocks selected in step b) so as to form a virtual map fragment.

Preferably, in step c), the graphic images corresponding to the selected basic landform graphic data blocks are stacked in a preset order so as to form the virtual map fragment.

Moreover, a third object of the present invention is to provide a virtual map generator capable of generating any size of virtual maps.

Accordingly, the virtual map generator of the present invention comprises a storage unit, a control unit, and a stacking unit.

The stowage unit is for storing a plurality of basic landform graphic data blocks each representing a graphic image of a corresponding landform layer. The control unit is for selecting at least two of the basic landform graphic data blocks stored in the storage unit. The stacking unit is for stacking the graphic images corresponding to the basic landform graphic, data blocks selected by the control unit so as to form a virtual map fragments.

Preferable, the virtual map generator further comprises a receiver unit for receiving a map command. The control unit selects the basic landform graphic data blocks according to the map command.

Other features and advantages of the present invention will become apparent in the following detailed description of the preferred embodiment with reference to the accompanying drawings, of which:
Figure 1 is a block diagram illustrating a preferred embodiment of the virtual map generator of the present invention;
Figure 2 is a block diagram illustrating components of the virtual map generator of the preferred embodiment;
Figure 3 is a plot showing sixteen configurations of a landform layer, in which grass is adopted to illustrate the landform layer;
Figure 4 is a plot illustrating four landform patterns of the landform layer in which the grass are disposed in the lower right-hand corner and the lower left-hand corner;
Figure: 5 is a flow chart illustrating the preferred embodiment of a virtual map generating method of the present invention, in which a virtual character is moving from a current region to a target region;
Figure 6 (a) is a perspective view illustrating stacking of four graphic images of corresponding landform: lasers;
Figure 6 (b) is a schematic view illustrating a virtual map fragment formed by stacking the four graphic images;
Figure 7 is a schematic view illustrating a virtual map formed by piecing together a plurality of virtual 1 map fragments;
Figure 8 is a flowchart illustrating the preferred embodiment of a virtual map generating method of: the present invention, in which the virtual character is moving in the virtual map; and
Figure 9 is a schematic view illustrating a subsequent virtual map formed by piecing together a shift area and an overlap area and corresponding to movement of the virtual character.

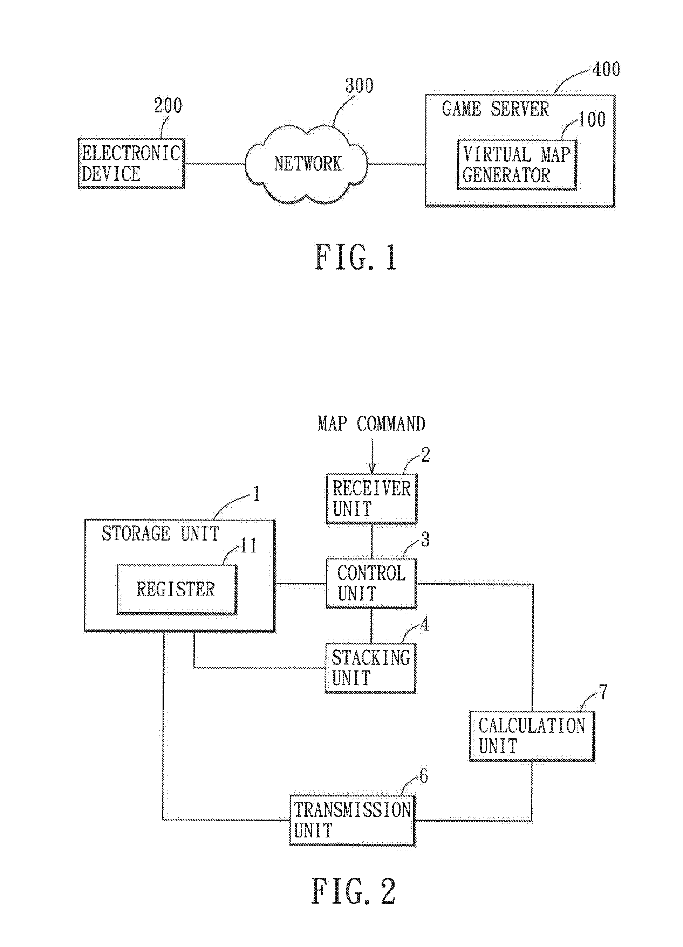

Referring to Figure 1 and Figure 2, a preferred embodiment of a virtual map generator 100 of the present invention is illustrated. The virtual map generator 100 is to be applied in a game server 400. The game server 400 may perform data transmission With an electronic device 200 which is applicable: for a user to play flash web games thereon via a network 300. The virtual map generator 100 may generate a virtual map applicable to the flash web games.

The virtual map generator 100 comprises a storage unit 1, a receiver unit 2, a control unit 3, a stacking unit 4, a transmission unit 6 and a calculation unit 7.

The storage unit 1 stores a plurality of basic landform graphic data blocks each representing a graphic image of a corresponding landform layer, and a landform type code for providing landform type attributes to the basic landform graphic data blocks. In this embodiment, four landform types, i.e., land, grass, san and water are adopted to illustrate the landform type. However, numbers and types thereof are not limited to the disclosure of this embodiment. The landformtype code is a digital code for indicating a corresponding landform type, for example, 00 represent ing land, 01 representing grass, 10 representing sand, and 11 representing water.

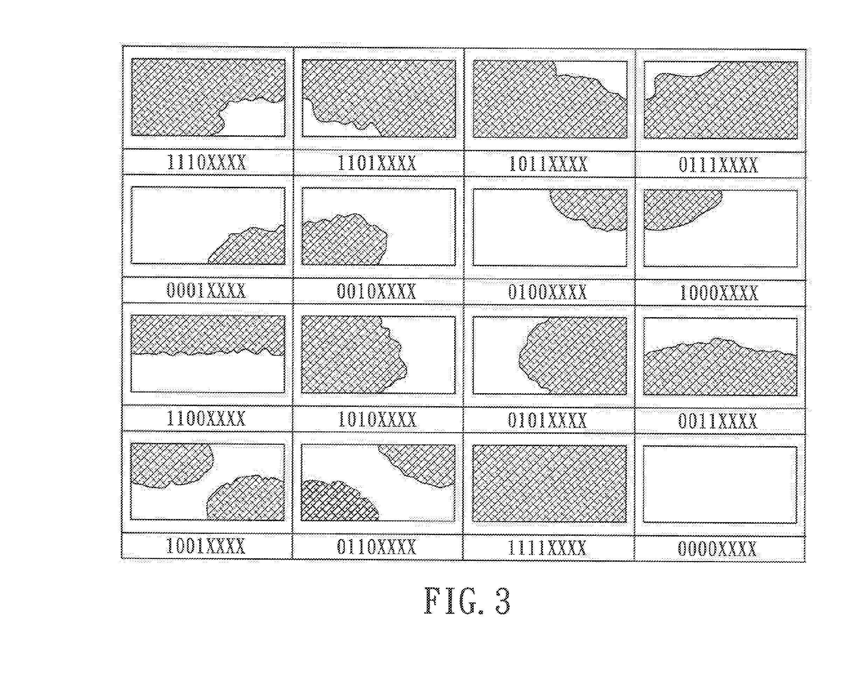

In this embodiment each of the basic landform graphic data blocks stored in the storage unit 1. is associated with a unique digital code. The unique digital code is an 8-bit digital code. Referring to Figure. 3, coding rule of the unique digital code is illustrated hereinafter:

| X | X | X | X | XXXX |
|---|---|---|---|---|
| Upper left-hand | Upper right-hand | Lower left-hand | Lower right-hand | |
| corner | corner | corner | corner | |
| Layer position code | | | | Landform pattern code |

The unique digital code includes a layer position code for indicating at least one applicable map layer position, and a landform pattern code for indicating a corresponding landform pattern applied to the at least one applicable map layer position. The layer position code is the four most significant bits (HSB) of the unique digital code, and each of the four bits indicates the applicable map layer position at the upper left-hand corner, upper right-hand corner, lower left-hand corner and lower right-hand corner of the landform layer corresponding to the basic landform graphic data block, respectively. The landform layers in Figure 13 provided with a grass landform type attribute (parts with screen dot) are given as an example, If the unique digital code of the basic landform graphic data block is 1000XXXX, the upper left-hand corner of the graphic image of the landform layer corresponding to the basic landform graphic data block is provided with grass and the remaining part of the graphic image is blank (transparent). If the unique digital code of the basic landform graphic data block is 0110XXXX, the upper right-hand corner and the lower left-hand corner of the graphic image of the landform layer corresponding to the basic landform graphic data block are provided with grass and the remaining part of the graphic image is blank. That is, the graphic image of the landform layer corresponding to the basic landform graphic data block is divided into four applicable map layer positions, each being indicated by a respective one of the four MSB of the unique digital code. Specifically, 1 indicates that the corresponding applicable map layer position is provided wi th the landform pattern, and 0 indicates that the corresponding applicable map layer position is blank (transparent). In this way, each of the landform layers has sixteen kinds of image styles (including a full blank configuration of the landform Layer which corresponds to the unique digital code of 0000XXXX). Naturally, the more digital bits of the layer position code, the more realistic the graphic image of the landform layer corresponding to the basic landform graphic data block is.

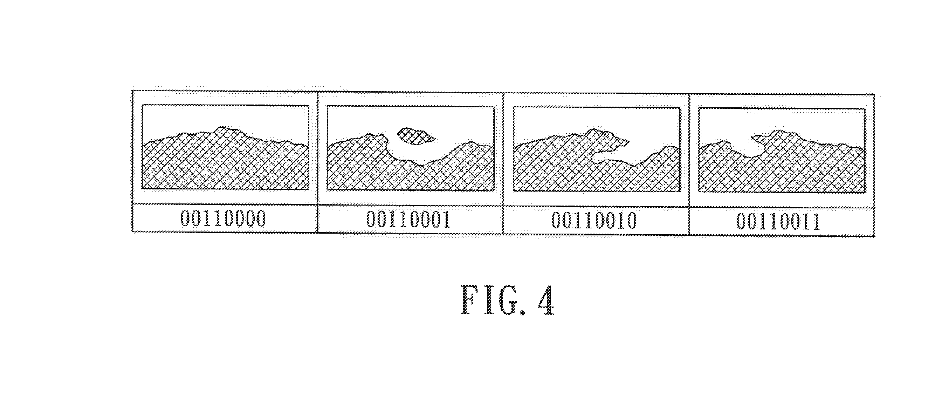

The landform pattern code is the four least significant bits (LSB) of the unique digital code, and indicates sixteen (2⁴) kinds of landform pattern styled applied to the sixteen kinds of image styles, such that the virtual map displayed on the electronic device 200 may he more natural and less repetitive. Referring to Figure 4, four landform layers provided with the grass landform type attribute are given as examples once again, in which the four unique digital codes 00110000, 00110001, 00110010 and 00110011 indicate four configurations of the landform pattern applied to the landform layer with the lower right-hand corner and lower left-hand corner applicable map layer positions. In the same way, the more digital bits of the landform pattern code, the more varied the landform layer corresponding to the basic landform graphic data block is.

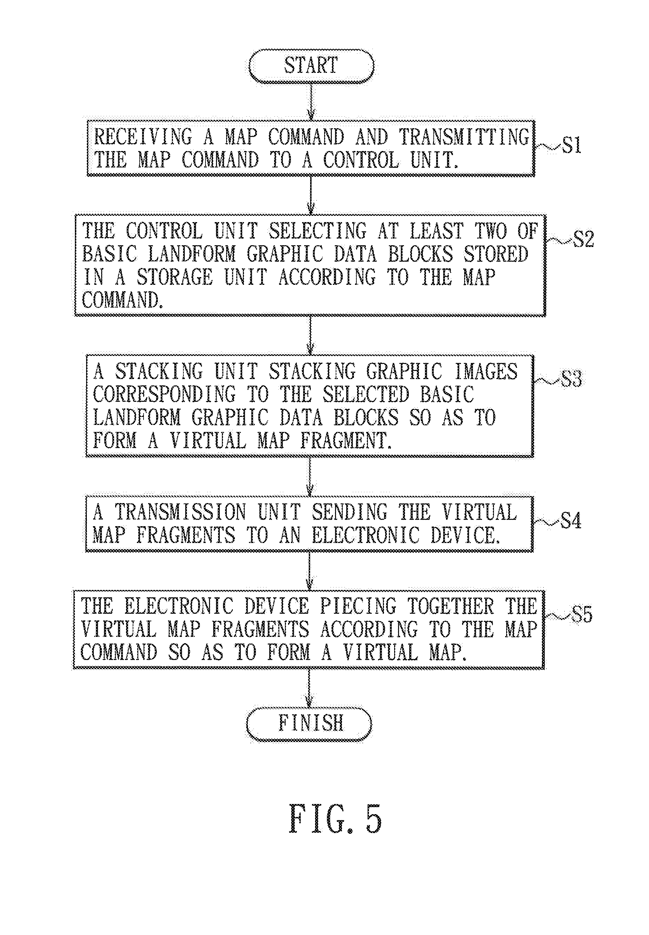

Referring to Figure 5, a virtual map generating method performed by the virtual map generator 100 is illustrated. First of all, it is pressed that the user has set an account for the flash web game, and that after the user has legged In, the user may control a virtual character.

In step S1, when the virtual character moves from a current region to a target region in which scenes thereof are different from those of the current region (for example, the virtual character moves from a town to a wild field), the receiver unit 2 may receive a map command corresponding to the target region (the wild field) and transmit: the map command to the control unit 3. In this embodiment, the map command is transmitted from the electronic device 200 when the user clicks a transporting media (such as a portal) in the game, via the network 300 to the receiver unit 2 of the virtual map generator 100.

In step S2, the control unit 3 selects at least two of the basic landform graphic data blocks stored in the storage unit 1 according to the map command, and transmits the selected basic landform graphic data blocks to the stacking unit 4.

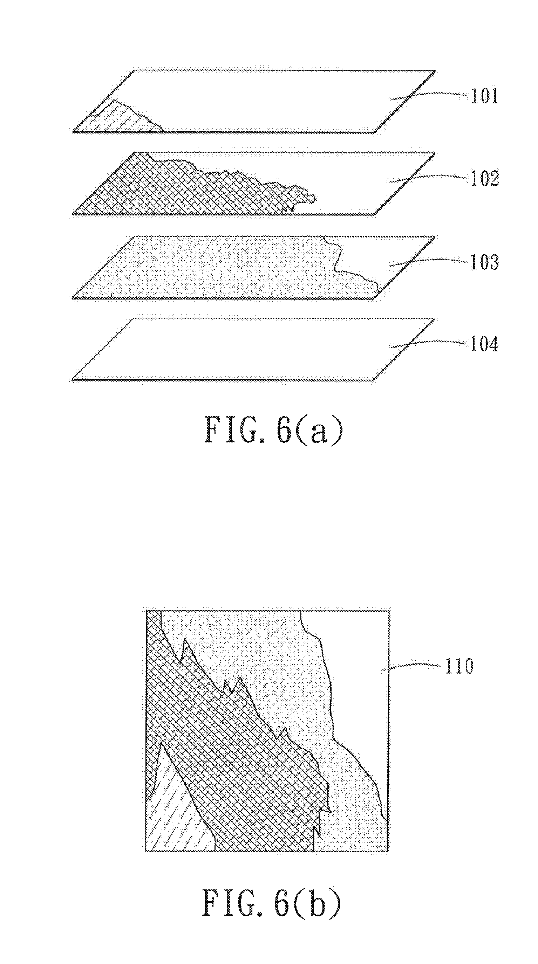

In the aforementioned presumption, the user controls the virtual character to move from the town to the wild field. If the wild field is composed of land, grass, sand and water as shown in Figure 6 (a), the control unit 3 selects four basic landform graphic data blocks 101, 102, 103 and 104 each to be provided with a corresponding lahdform type attribute of land, grass, sand and water, respectively. Further, after each of the layer position code of the unique digital code corresponding to a respective one of the selected basic landform graphic data blocks is determined according to the map command, since each basic landform graphic; data block with the same layer position code has sixteen kinds of landform pattern styles (i.e., 00110000∼00111111, the control unit 3 may select one of the landform pattern style randomly, that is, randomly determining the landform pattern code (for example, 0110101) , and may transmit the selected basic landform graphic data blocks to the stacking unit 4. Certainly, a number of the selected basis landform graphic data blocks may vary with respect to the map command.

In step S3, the stacking unit 4 stacks the graphic images corresponding to the basic landform graphic data blocks selected by the control unit 3 so as to form a virtual map fragment 110 as shown in Figure 6 (b), and transmits the virtual map fragment 110 to a register 11 of the storage unit 1 for storage. Since there are variations in altitude of a landform, the graphic images corresponding to the selected basic landform graphic data blocks provided with the corresponding landform type attribute are stacked in a preset order which is predetermined according to the landform type attributes. In this way, the virtual map fragment 110 formed by stacking may be more realistic. In this embodiment, the preset order for stacking the graphic images corresponding to the selected basic landform graphic data blocks from top to bottom is: land, grass, sand and water (101 to 104).

The control unit 3 continuously selects a plurality of the basic landform graphic data blocks according to the map command, and the stacking unit 4 subsequently stacks the graphic images corresponding to the selected landform graphic data blocks so as to form the virtual map fragments 110. By repeating step S2 and step S3, there will be a plurality of the virtual map fragments 110 stored in the register 11.

In step S4, the transmission unit 6 sends the virtual map fragments 110 stored in the register 11 to the electronic device 200.

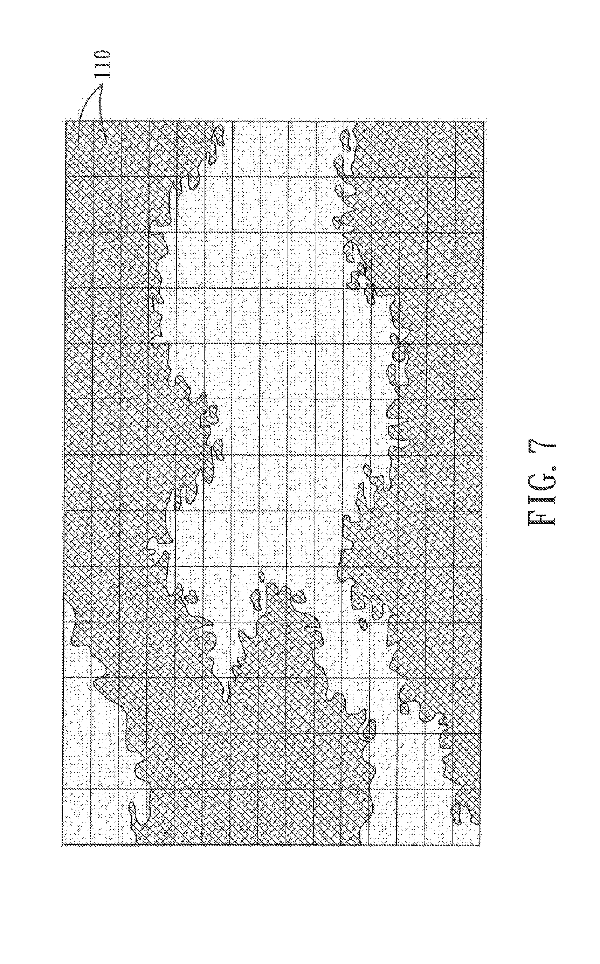

In step 5, the electronic device 200 pieces together the virtual map fragments 110 according to the map command so as to form the virtual map, and displays the virtual map on a displayer (not shown) of the electronic device 200, i.e., the target region (the wild field) such as that shown in Figure 7.

Therefore, by stacking at least two of the graphic images corresponding to the basic landform graphic data blocks and piecing together the virtual map fragments 110 so as to form the virtual map, the scale of the virtual map may be increased as required by the flash web game. Furthermore, since an identical basic landform graphic data block may be used repeatedly in the same or different virtual maps, only a fixed number of basic landform graphic data blocks are required to be stored in the storage unit 1, and only different virtual map fragments 110 formed by the basic landform graphic data blocks are required to be sent to the electronic device 200. Accordingly, a number of the virtual map fragments 100 sent to the electronic device 200 is relatively reduced, and efficiency of network transmission is not adversely influenced.

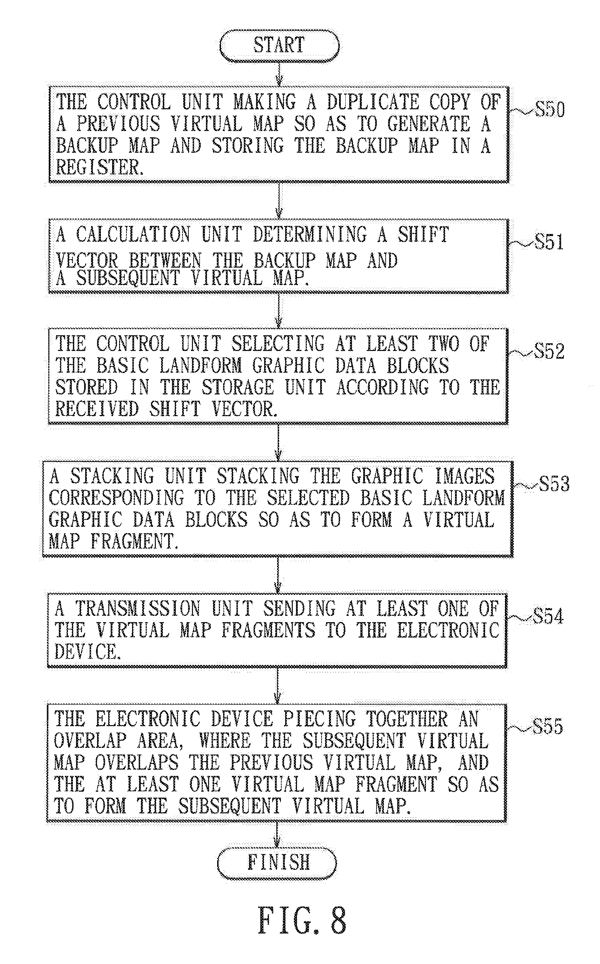

Moreover, when the virtual character controlled by the user moves in the same region, most of the scenes remain identical. Therefore, in this situation, the virtual map generator 100 of the present invention may only generate the virtual map fragment 110 required as a result of movement of the virtual character, and send the newly generated virtual map fragment 110 to the electronic device 200, such that the electronic device 200 pieces together the newly generated virtual map fragments 110 and the original virtual map so as to form a new virtual map. In this way, a virtual map generating efficiency may be substantially promoted so as to satisfy a specification requirementt for data throughput between the electronic device 200 and the game server 400 at a speed of 24 frames per second (24 fps). Detailed explanation is provided hereinafter with reference to Figure 2 and steps S50 to S55 in Figure 8.

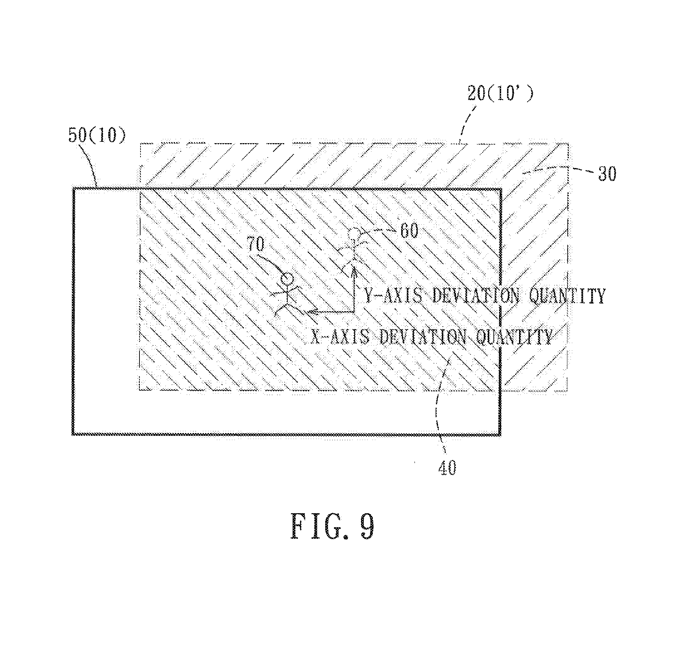

In step S50, when a previous virtual map 50 is displayed on the electronic device 200, the control unit 3 is configured to make a duplicate copy of the previous virtual map 50 iso as to generate a backup map 10 corresponding to the previous virtual map 50, such as a solid line block shown in Figure 9, and is configured to store the backup map 10 in the register 11 of the storage unit 1. Specifically, the previous virtual map 50 is the virtual map before the virtual character moves.

In step S51, when the virtual character has moved in the same region, the calculation unit 7 of the virtual map generator 100 is configured to determine a shift vector between the backup map 10 (or the previous virtual map 50) and a subsequent virtual map 20 to be displayed on the electronic device 200, and send the shift vector to the control unit 3. Specifically, the subsequent virtual map 20 is the virtual map after the virtual character moves.

Referring to Figure 9, the shift vector between the backup map 10 and the subsequent virtual map 20 is calculated according to a previous coordinate 70 which is position information of the virtual character in the previous virtual map 50 (or the backup map 10) and a subsequent coordinate 60 which is position information of the virtual character in the subsequent virtual map 20 received from the electronic device 200 via the network 300. That is, the calculation unit 7 calculates an x-axis deviation quantity and a y-axis deviation quantity between the previous coordinate 70 and the subsequent coordinate 60 resulting from movement of the virtual character so as to obtain the shift vector.

Moreover, since the virtual map generator 100 generates the virtual maps at a frequency of 24 frames per second (24 fps), the calculation unit 7 in this embodiment is configured to determine the shift vector at the same frequency so as to update a position of the virtual character synchronously as updating the virtual maps.

In step S52, the control unit 3 is configured to select at least two of the basic landform graphic data blocks stored in the storage unit 1 according to the received shift vector (i.e., the x-axis deviation quantity and the y-axis deviation quantity), and send the selected basic landform graphic data blocks to the stacking unit 4.

In step S53, the stacking unit 4 is configured to stack the graphic images corresponding to the seleted basic landform graphic data blocks in the preset order so as to form the virtual map fragment 110, and store the virtual map fragment 110 in the register 11 of the storage unit 1. Specifically, the virtual map fragment 110 and the backup map 10 are stored in different registers (not shown), such that data of the virtual map fragment 110 may not overlap data of the backup map 10.

The control unit 3 continuously selects a plurality of the basic landform graphic data blocks according to the shift vector, and the stacking unit 4 subsequently stacks the graphic images corresponding to the selected landform graphic data blocks so as to form the virtual map fragments 110. By repeating step S52 and step S53, there will be a plurality of the virtual map fragments 110 stored in the register 11.

In step S54, the transmission unit 6 of the virtual map generator 100 is configured to send at least one of the virtual map fragments formed thereby to the electronic device 200 via the network 300,

In step S55, the electronic device 200 is configured to piece together an overlap area 40, where the subsequent virtual map 20 overlaps the previous virtual map 50, and the at least one virtual map fragment 110 received from the virtual map generator 100 so as to form the subsequent virtual map 20. In other words, the at least one virtual map fragment 110 formed according to the shift vector of the virtual character constitutes a shift area 30.

Afterwards, the central unit 3 of the virtual map generator 100 is configured to make a duplicate copy of the subsequent virtual map 20 so as to generate another backup map 10', store the another backup map 10' in the register 11 to replace the original backup map 10, and cooperate with the s tacking unit 4, the calculation unit 7 and the transmission unit 6 to perform step S51 to S55 repeatedly so as to continuously provide the virtual maps required as a result of movement of the virtual character, which is controlled by the user, in the same region.

In summary, the virtual map generator 100 of the present invention may generate the virtual map required by flash web games by means of stacking at least two of the graphic images corresponding to the basic land form graphic data blocks so as to form a plurality of the virtual map fragments 110, and sending the virtual map fragments 110 to the electronic device 200 which pieces together the virtual map fragments 110 so as to form the virtual map. Moreover, since the virtual map fragment 110 may be used repeatedly, a large virtual map of an arbitrary scale may be displayed on the electronic device 200 without influencing network transmission efficiency too much. Additionally, when the virtual character is moving in the same region, the virtual map generator 100 of the present invention may form the subsequent virtual map 20 in which the virtual character has moved, by merely generation of the shift area 30 in response to movement of the virtual character and cooperation of the overlap area 40 where the subsequent virtual map 20 overlaps the previous virtual map 50, so as to promote virtual map generating efficiency.

## Claims

1. A virtual map fragment generating method to be performed by a virtual map generator (100), the virtual map fragment generating method comprising:
a) establishing a plurality of basic landform graphic data blocks each representing a graphic image of a corresponding landform layer;
b) selecting at least two of the basic landform graphic data blocks established in step a); and
c) stacking the graphic images corresponding to the basic landform graphic data blocks selected in step b) so as to form a virtual map fragment (110).

2. The virtual map fragment generating method as claimed in claim 1, **characterized in that**, in step c), the graphic images corresponding to the selected basic landform graphic data blocks are stacked in a preset order so as to form the virtual map fragment (110).

3. The virtual map fragment generating methods as claimed in claim 2, further **characterized in that**,
in step b), each of the selected basic landform graphic data blocks is provided with a corresponding landform type attribute, and
in step c), the graphic images corresponding to the selected basic Landform graphic data blocks provided with the corresponding landform type attribute are stacked in the preset order which is predetermined according to the landform type attributes.

4. A virtual map generating method to be performed by a virtual map generator (100) and an electronic devise (200) which communicates with the virtual map generator (100) via a network (300), the virtual map generating method comprising:
a) establishing a plurality o basic landform graphic data blocks each representing a graphic image of a corresponding landform layer;
b) configuring the virtual map generator (100) to select at least two of the basic landform graphic data blocks established in step a);
c) configuring the map generator (100) to stack the graphic images corresponding to the basic landform graphic data blocks selected in step b) so as to form a virtual map fragment (110);
d) the virtual map generator (100) to send a plurality of the virtual map fragments (110) formed thereby to the electronic device (200) via the network (300) ; and
e) configuring the electronic device (200) to piece together the virtual map fragments (110) received from the virtual map generator (100) so as to form a virtual map.

5. The virtual map generating method as claimed in claim 4, characterized i n that, in step c), the graphic images corresponding to the Selected basic landform graphic data blocks are stacked in a preset order so as to form the virtual map fragment (110).

6. The virtual map generating method as claimed in claim 5, further **characterized in that**,
in step b), each of the selected basic landform graphic data blocks is provided with a corresponding landform type attribute, and
in step c), the graphic images corresponding to the selected basic landform graphic data blocks provided with the corresponding landform type attribute are stacked in the preset order which is predetermined according to the landform type attributes.

7. A virtual map generating method to be performed by a virtual map generator (100) and an electronic device (200) which communicates with t h e virtual map generator (100) via a network (300), the virtual map generating method comprising:
a) establishing a plurality or basic Landform graphic data blocks each representing a graphic image of a corresponding landform layer;
b) configuring the virtual map generator (100) to determine a shift vector between the a previous virtual map (50) displayed on the electronic device (200) and a subsequent virtual map (20) to be displayed on the electronic device (200);
c) configuring the virtual map generator (100) to select at least two of the basic landform graphic data blocks according to the shift vector;
d) configuring the virtual map generator (100) to stack the graphic images corresponding to the basic landform graphic data blocks selected in step c) so as to form a virtual map fragment (110);
e) configuring the virtual map generator (100) to send at least one of the virtual map fragments (110) formed thereby to the electronic device (200) via the network (300); and
f) configuring the electronic device (200) to piece together an area, where the subsequent virtual map (20) overlaps the previous virtual map (50) and the at least one virtual map fragment (110) received from the virtual map generator (100) so as to form the subsequent virtual map (20).

8. The virtual map generating method as claimed in claim 7, **characterized in that**, in step b), the shift vector is calculated according to position information of a virtual character in the previous virtual map (50) and the subsequent virtual map (20) received from the electronic device (200) via the network (300) .

9. The virtual map generating method as claimed in claim 8, further **characterized in that**, in step b), an x-axis deviation quantity and a y-axis deviation quantity resulting from movement of the virtual character are calculated so as to obtain the shift vector.

10. The virtual map generating method as claimed in any one of claims 7 to 9, further **characterized in that**, in step d), the graphic images corresponding to the selected basic landform graphic data blocks are stacked in a preset order so us to form the virtual map fragment,

11. The virtual map generating method as claimed in claim 10, further **characterized in that**,
in step c), each of the selected basic landform graphic data blocks is provided with a corresponding landform type attribute, and
in step d), the graphic images corresponding to the selected basic landform graphic data blocks provided with the corresponding landform type attribute are stacked in the preset order which is predetermined according to the landform type attributes.

12. A virtual map generator (100) comprising:
a storage unit (1) for storing a plurality of basic landform graphic data blocks each representing a graphic image of a corresponding landform layer;
a control unit (3) for selecting at least two of the basic landform graphic data blocks stored in said storage unit (1); and
a stacking unit (4) for stacking the graphic images corresponding to the basic landform graphic data blocks selected by said control unit (3) so as to form a virtual map fragment (114).

13. The virtual map generator (100) as claimed in any one of claims 12, further **characterized in that** each of the basic landform graphic data: blocks stored in said storage unit (1) is associated with a unique digital code.

14. The virtual map generator (100) as claimed in claim 13, further **characterized in that** said unique digital code includes a layer position code for indicating at least one applicable map layer position, and a landform pattern code for indicating a corresponding landform pattern applied to the at least one applicable map layer position,

15. The virtual map generator (100) as claimed is any one of claims 12 to 14, further **characterised in that** staid stacking unit (4) stacks the graphic images corresponding to the selected basic landform graphic data blocks in a preset order so as to form the virtual map fragment: (110).

16. The virtual map generator (100) as claimed in claim 15, further **characterized in that**,
said control unit (3) is configured to provide the selected basic landform graphic data blocks with a corresponding landform type attribute, and
said stacking unit (4) is configured to stack the graphic images corresponding to the selected basic landform graphic data blocks provided with the corresponding landform type attributes in the preset order which is predetermined according to the landform type attribute.

17. The virtual map generator (100) as claimed in any one of claims 12 to 16, Which is adapted for implementation in a game server (400).
